Europäisches Patentamt

**European Patent Office**

**Office européen des brevets**

(19)

(11) Publication number: **0 146 765**
**A2**

(12) # EUROPEAN PATENT APPLICATION

(21) Application number: **84113809.2**

(22) Date of filing: **15.11.84**

(51) Int. Cl.⁴: **A 01 J 25/00**
**A 01 J 25/12**

(30) Priority: **30.11.83 IT 2369283 U**

(43) Date of publication of application:
**03.07.85 Bulletin 85/27**

(84) Designated Contracting States:
**AT BE CH DE FR GB LI NL SE**

(71) Applicant: **TECNOPROGETTI S.r.l.**
**Via Labriola, 28**
**I-41100 Modena(IT)**

(72) Inventor: **Muzzarelli, Gabriele**
**Via Marzabotto, 116**
**I-41199 Modena(IT)**

(74) Representative: **Luksch, Giorgio, Dr.-Ing. et al,**
**Ing. A. Giambrocono & C. S.r.l. Via Rosolino Pilo, 19/b**
**I-20129 Milano(IT)**

(54) Continuous kneading machine for the production of plastic curd cheeses.

(57) A continuous kneading machine for the production of plastic curd cheeses, comprising at least one heating section provided with at least one screw (3, 4) and a plasticising (kneading) section disposed downstream of the preceding, in which the plasticising (kneading) section comprises a pair or rotary implements (7), provided with at least one arm (17) projecting from their axis of rotation.

Fig. 2

- 1 -

CONTINUOUS KNEADING MACHINE FOR THE PRODUCTION OF PLASTIC CURD
CHEESES

This invention relates to a continuous kneading machine for the production of plastic curd cheeses, comprising at least one heating
section provided with at least one screw, and a kneading section disposed downstream of the preceding section.

In conventional machines, for example in those described in Italian
patent applications 67940 A/77 of 27.4.77 and 21937 A/79 of 18.4.79,
the kneading section comprises a dipping arm device which, although
being reliable and effective, is however particularly complicated and
costly.

The object of the present invention is to provide a machine of the
indicated type comprising a kneading section which is extremely simple,
reliable, economical and particularly effective.

This and further objects are attained essentially in that the kneading
section comprises a pair of rotary implements provided with at least
one arm projecting from the axis of rotation.

Advantageously, the arm projects laterally and forwards.

The arms of each implement are advantageously more than one in number.

If only one screw is used in the heating section, a first implement
has its axis of rotation coinciding with that of the screw, to which it can be directly connected, whereas the other implement, rotating about an axis parallel to the preceding, receives its motion from the screw or from the first implement by way of a linkage of any known type.

If two screws are used, each of the implements is connected to one of the screws, with which it is then coaxial.

The invention will be more apparent from the detailed description given hereinafter by way of example with reference to the accompanying drawing, in which:

Figure 1 is a diagrammatic side view of the machine, with some parts removed and other parts shown in longitudinal section;
Figure 2 is a plan view thereof;
Figure 3 is an exploded view of the connection between a screw and an implement;
Figures 4,5 and 6 are front views of implements with different numbers of arms.

In the figures, the reference numeral 1 indicates overall the metal support frame for the machine. The frame upperly carries a tank 2 of substantially rectangular plan shape provided with an interspace for the indirect heating of the curd by means of any suitable fluid. Two screws 3, 4 are disposed in the heating tank in the longitudinal direction thereof, and are rotated in opposing directions by an adjustable geared motor unit 5 mounted on one of the ends of the heating tank. The screws are rotatably supported in known manner in this end.

The heating tank can be covered by a removable cover, not shown, possibly provided with windows for visual inspection of the process taking place within said tank. Water or steam at the required temperature can also be fed into the tank in known manner.

At the outlet end or rather downstream of the tank 2, which together with the screws constitutes the heating section of the machine, there is provided the kneading or plasticising section, which comprises a plasticising vessel or tank 6 and two implements 7, which are identical in this example and are located in said tank 6. This tank can also be closed upperly by a removable cover provided with a window for the visual inspection of the plasticising process. The tank can also be provided in known manner with means for introducing and discharging fluids (such as water, whey, steam).

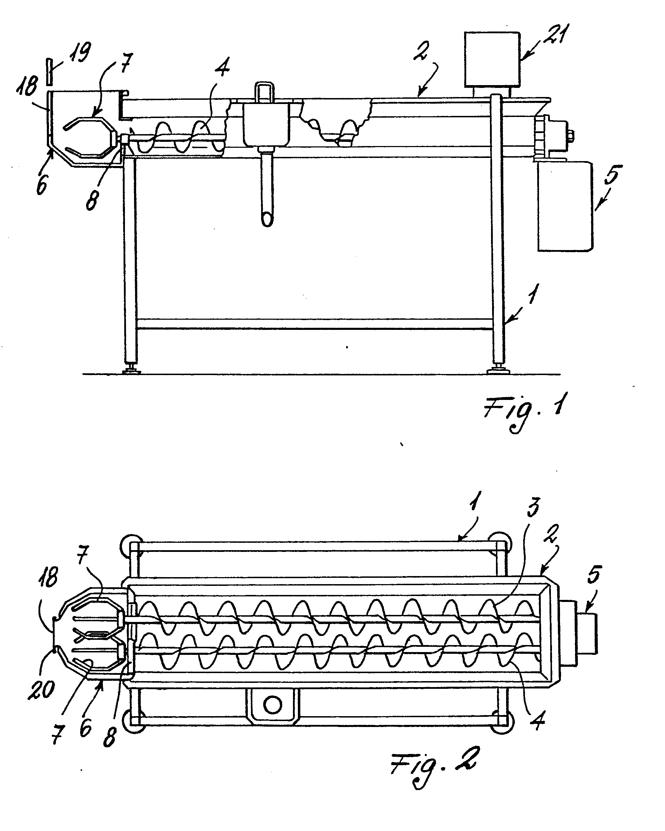

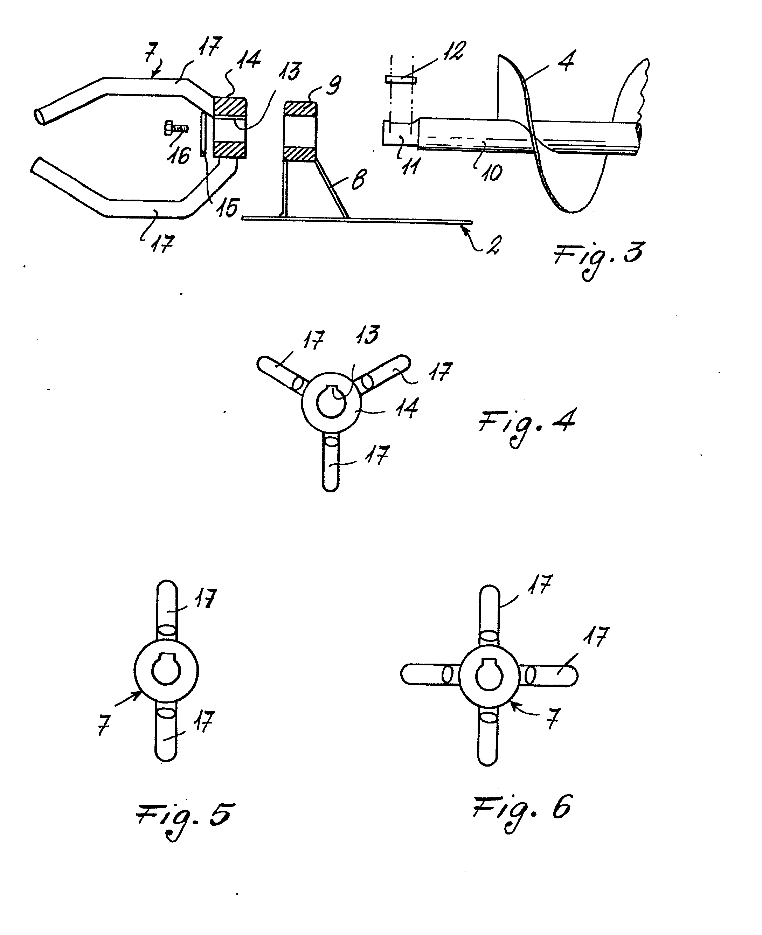

In this example, each of the implements is made rigid with a screw, and as shown in Figure 3 this is done by providing at the downstream end of the tank 2 a wall 8 of limited height to which are fixed two bushes 9 for supporting the shaft 10 of the screws 3, 4. The end of the shafts 10 projects beyond the relative bush 9 in the form of a sunken part 11 which is provided with a longitudinal peripheral spline in which there is disposed a key 12, which projects to be also disposed in a corresponding spline 13 in the hub 14 with which each implement is provided, the arrangement being such that rotation is transmitted to the implement by way of the screw.

The implement is fixed to the shaft by means of a ring 15 and a fixing screw 16 which is screwed into a threaded bore provided in the end of said shaft.

The implement of this example, of which a front view is shown in Figure 4, comprises three equidistant arms 17 projecting laterally and forwards with respect to the shaft 10, and preferably but not necessarily being of broken-line extension which at least partly matches (see Figure 1) the form of the lower part of the plasticising tank 6.

The plasticising tank 6 comprises an outlet port 18 which can be shut-off to a varying degree by a valve plate 19 slidable along vertical guides 20 disposed to the sides of the port 18.

As shown in Figures 5 and 6, the implements can have a different number of arms 17, for example two or four. The arms are generally in the form of metal bars of curved, and preferably circular, cross-section.

The curd, cut into pieces for example by means of a known device, indicated by 21 in Figure 1, reaches the inlet end of the heating tank 2, and is made to advance in contact with water mixed with the relative whey by the screws 3 and 4, which exert a preliminary kneading action on the curd. The processed mass is fed by the screws into the plasticising tank 6, in which the counter-rotating implements 7 exert, in the presence of water, their plasticising action which can be considered as consisting of lifting, relinquishing and stretching the material present in the tank, this material being gradually discharged from the adjustable cross-section port 18 as it becomes plasticised.

Claims:

1.        A continuous kneading machine for the production of plastic curd cheeses, comprising at least one heating section provided with at least one screw, and a plasticising (kneading) section disposed downstream of the preceding, characterised in that the plasticising (kneading) section comprises a pair of rotary implements (7) provided with at least one arm (17) projecting from their axis of rotation.

2.        A machine as claimed in claim 1, characterised in that the arm or arms (17) project laterally and forwards.

3.        A machine as claimed in claim 2, characterised in that the arms (17) are more than one in number.

4.        A machine as claimed in claim 1, characterised in that the arms (17) are in the form of bars of curved cross-section.

5.        A machine as claimed in claim 4, characterised in that the arms (17) are of broken-line extension.

6.        A machine as claimed in one or more of the preceding claims, characterised in that at least one of the implements (7) is rigid with a screw (3,4) in such a manner as to rotate therewith.

7.        A machine as claimed in one or more of the preceding claims, characterised in that each of the implements (7) is rigid with a screw (3,4).

8.    A machine as claimed in one or more of the preceding claims, characterised in that the two implements (7) are linked together either directly or by way of the screw (3,4) with which one of them is rigid.

Fig. 1

Fig. 2

Fig. 3

Fig. 4

Fig. 5

Fig. 6